# EUROPEAN PATENT SPECIFICATION

(11) **EP 3 610 417 B1**
(45) Date of publication and mention of the grant of the patent: **11.11.2026**
(21) Application number: 18717596.3
(22) Date of filing: 12.04.2018
(51) Int. Cl.: G06N 3/0442, G06N 3/084, G06N 3/0985

(54) **BLACK-BOX OPTIMIZATION USING NEURAL NETWORKS**
FLUGSCHREIBEROPTIMIERUNG MITTELS NEURONALER NETZE
OPTIMISATION DE BOÎTE NOIRE À L'AIDE DE RÉSEAUX NEURONAUX

(30) Priority: 12.04.2017 US 201762484821 P
(43) Date of publication of application: 19.02.2020
(73) Proprietor: GDM Holding LLC, Mountain View, CA 94043 (US)
(72) Inventor: DE FREITAS, Joao Ferdinando Gomes, London EC4A 3TW (GB); CHEN, Yutian, London EC4A 3TW (GB)
(74) Representative: Marks & Clerk GST
(86) International application number: PCT/EP2018/059354
(87) International publication number: WO 2018/189279

(56) References cited:
- YUTIAN CHEN ET AL: "Learning to Learn for Global Optimization of Black Box Functions", AI CH E JOURNAL, 9 December 2016 (2016-12-09), US, pages 1 - 12, XP055490872, ISSN: 0001-1541
- BARRET ZOPH ET AL: "Neural Architecture Search with Reinforcement Learning", 15 February 2017 (2017-02-15), XP055444384, Retrieved from the Internet <URL:https://arxiv.org/pdf/1611.01578.pdf> [retrieved on 20180125]
- MARCIN ANDRYCHOWICZ ET AL: "Learning to learn by gradient descent by gradient descent", ARXIV.ORG, CORNELL UNIVERSITY LIBRARY, 201 OLIN LIBRARY CORNELL UNIVERSITY ITHACA, NY 14853, 14 June 2016 (2016-06-14), XP080708467

## Description

### BACKGROUND

This specification relates to determining optimized settings for process parameters of a machine learning training process using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Some neural networks are recurrent neural networks. A recurrent neural network is a neural network that receives an input sequence and generates an output sequence from the input sequence. In particular, a recurrent neural network can use some or all of the internal state of the network from a previous time step in computing an output at a current time step. An example of a recurrent neural network is a long short term (LSTM) neural network that includes one or more LSTM memory blocks. Each LSTM memory block can include one or more cells that each include an input gate, a forget gate, and an output gate that allow the cell to store previous states for the cell, e.g., for use in generating a current activation or to be provided to other components of the LSTM neural network. YUTIAN CHEN et al., "Learning to Learn for Global Optimization of Black Box Functions", AI CH E JOURNAL, US, (20161209), ISSN 0001-1541, pages 1 - 12, describes an approach for training recurrent neural networks to perform black box optimization. Barret Zoph et al., "Neural Architecture Search with Reinforcement Learning", (20170215), URL: https://arxiv.org/pdf/1611.01578.pdf, (20180125), describes a recurrent neural network to generate model descriptions of neural networks and trained with reinforcement learning to maximize the expected accuracy of the generated architectures on a validation set. MARCIN ANDRYCHOWICZ et al., "Learning to learn by gradient descent by gradient descent", ARXIV.ORG, CORNELL UNIVERSITY LIBRARY, 201 OLIN LIBRARY CORNELL UNIVERSITY ITHACA, NY 14853, (20160614), describes learned algorithms implemented by LSTMs.

### SUMMARY

According to first, second and third aspects of the present invention there is provided a a system for determining an optimized setting for one or more process parameters of a machine learning training process of training a machine learning model as defined in claim 1, a method as defined in claim 11 and a computer-readable storage medium as defined in claim 12. Preferred aspects of the invention are set out in the dependent claims.

### BRIEF DESCRIPTION OF THE DRAWINGS

FIG. 1 shows an example process parameter optimization system.
FIG. 2 shows an example training iteration during the training of the recurrent neural network.
FIG. 3 is a flow diagram of an example process of determining optimized process parameter values.

Like reference numbers and designations in the various drawings indicate like elements.

### DETAILED DESCRIPTION

This specification describes a process parameter optimization system implemented as one or more computer programs on one or more computers in one or more locations that determines an input that optimizes, i.e., minimizes or maximizes, a black box function.

A black box function is a function for which the closed form is not known, but that can be evaluated at a query point in the domain of the function. That is, while the closed form of the function is not known, the output generated by the function for a given input can be evaluated.

In particular, the black box function is a function that measures the performance of a training process for a machine learning model, i.e., a process that trains a machine learning model to determine trained values of the parameters of the machine learning model, e.g., stochastic gradient descent or another gradient-descent based training process. More specifically, the training process is a process that trains the machine learning model to determine values for the weights of the machine learning model that optimize a training objective function, e.g., a loss function, that depends on the outputs generated by the model.

The machine learning model can be any of a variety of machine learning models, e.g., a deep neural network, a generalized linear model, or a support vector machine, configured to perform any of a variety of machine learning tasks, e.g., image processing tasks, speech recognition tasks, sequence transduction tasks, machine translation tasks, and so on.

The training objective function is generally a function that measures an error between the outputs generated by the model and outputs that should have been generated by the model. In this example, the black box function can be the training objective function, e.g., the loss function, as evaluated on a set of test inputs after the machine learning model has been trained using the training objective function for some number of iterations or for some period of time.

In these examples, the system optimizes the black box function with respect to one or more process parameters of the training process, i.e., determines the setting for the process parameters that minimizes or maximizes the measure of performance of the training process.

The process parameters can include one or more hyper-parameters of the training process. A hyper-parameter is a value that affects the performance of the training process but that is not learned as part of the training process. Examples of hyper-parameters can include, e.g., learning rate, momentum rate, batch size, and so on. More generally, instead of or in addition to the hyper-parameters, the process parameters can include architecture settings for the machine learning model, e.g., number of hidden layers, types of hidden layers, number of nodes per hidden layer, number of convolutional layers, number and properties of filters of the convolutional layers, and so on.

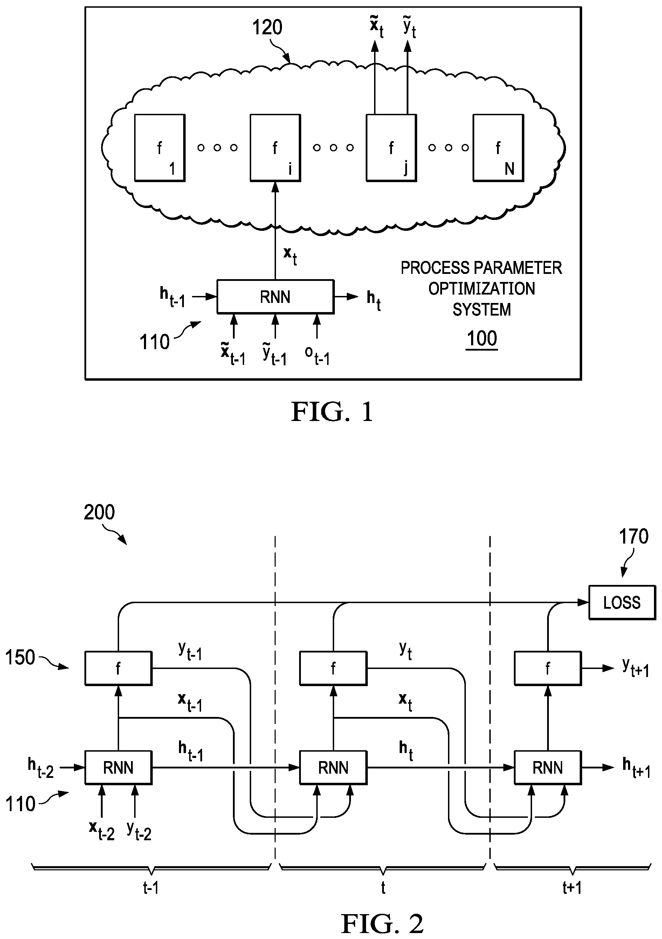

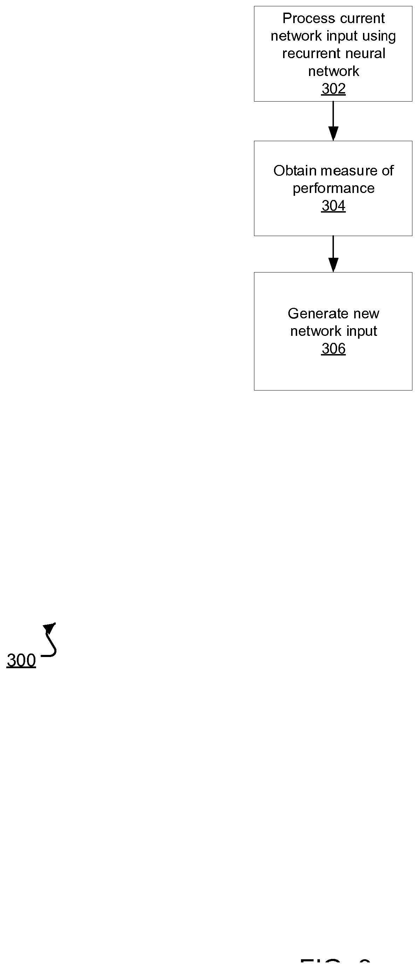

FIG. 1 shows an example process parameter optimization system 100. The process parameter optimization system 100 is an example of a system implemented as computer programs on one or more computers in one or more locations, in which the systems, components, and techniques described below can be implemented.

As described above, the process parameter optimization system 100 is a system that determines optimized values for one or more process parameters of a machine learning training process.

Because the optimized values for the process parameters will generally be different for different machine learning models, even if the two machine learning models are trained on the same training data and using a machine learning training process that is otherwise the same, the process parameter optimization system 100 generates respective optimized process parameter values for each machine learning model that is to be trained using the machine learning training process.

Once the process parameter optimization system 100 has determined the optimized values for training a given machine learning model, the process parameter optimization system 100 trains the machine learning model using the machine learning training process and in accordance with the optimized values of the process parameters. Once trained, the process parameter optimization system 100 outputs the trained machine learning model, i.e., output data specifying the trained values of the weights of the machine learning model to a user device or to another system, use the trained machine learning model to perform inference in accordance with the trained values of the weights of the model, or both.

Alternatively or in addition to training the machine learning model, the process parameter optimization system 100 can provide the optimized values of the process parameters to another system for use in training the machine learning model using the machine learning training process.

To determine the optimized process parameter values for a given machine learning model, the process parameter optimization system 100 uses a recurrent neural network 110 having a plurality of network parameters.

The recurrent neural network 110 is configured to receive a sequence of network inputs and process the sequence of network inputs in accordance with the network parameters to generate a respective network output for each network input. The recurrent neural network 100 can be implemented as any appropriate type of recurrent neural network that maintains an internal state or other data between network inputs in the sequence and uses and updates the internal state or other data when processing a given network input in the sequence. For example, the recurrent neural network 110 can be a long short-term memory (LSTM) neural network or a neural network that is augmented with an external memory, e.g., a differentiable neural computer (DNC).

In particular, the network input at a given time step *t* in the sequence includes at least (i) a respective input setting ***x̃***_{*t-*1} for each of the one or more process parameters that are being optimized and (ii) a measure ***ỹ***_{*t*-1} of a performance of the training process with the input setting ***x̃***_{*t-*1}*,* i.e., according to the measure that is being optimized by the system 100.

The network output generated by the recurrent neural network 110 for the network input at the given time step *t* defines an updated setting ***x**ₜ* for the one or more process parameters, i.e., a setting that is predicted to, in the case where the measure of performance is being minimized, increase, or, in the case where the measure is being maximized, decrease, the measure of performance of the process relative to the measure in the network input. As described above, the recurrent neural network 110 uses an internal state ***h***_{*t-*1} when generating the network output at time step *t* and also updates the internal state ***h***_{*t-*1} to generate an updated internal state ***h**ₜ.* For example, the network output can be a probability distribution over possible combinations of settings for the one or more process parameters. As another example, the network can directly predict the updated settings.

In order for the network outputs generated by the recurrent neural network 110 to predict effective process parameter settings, i.e., to predict settings that are helpful in determining high-quality optimized process parameter settings, the system 100 trains the recurrent neural network on training data. Training the recurrent neural network 110 is described in more detail below with reference to FIG. 2.

The system 100 determines the optimized settings for the process parameters by determining measures of performance for various candidate settings for the process parameters. After termination criteria are satisfied, e.g., after measures for a predetermined number of candidate settings have been determined or after a predetermined amount of time has elapsed since beginning to determine measures for candidate settings, the system 100 can select the candidate settings that have the best measure of performance as the optimized settings. That is, the system 100 can select the candidate settings that have the highest measure if the measure is being maximized or the lowest measure if the measure is being minimized.

The system 100 can select the candidate settings to be evaluated by repeatedly providing inputs to the recurrent neural network 110 and using the outputs generated by the recurrent neural network 110 to select new settings for evaluation.

In particular, as part of selecting and evaluating candidate settings, the system 100 can process a current network input using the recurrent neural network in accordance with the trained values of the network parameters to obtain a current network output that defines an updated setting for the process parameters. For example, at the time step t, the system 100 can process the network input that includes at least (i) a respective input setting ***x̃***_{*t-*1} for each of the one or more process parameters that are being optimized and (ii) a measure ***ỹ***ₜ₋₁ of the performance of the training process with the input setting ***x̃***_{*t-*1} to obtain the network output that defines the updated setting ***x**ₜ*.

The system 100 then obtains a measure of the performance of the machine learning training process with the updated setting defined by the current network output and generates a new network input that includes (i) the updated setting defined by the current network output and (ii) the measure of the performance of the training process with the updated setting defined by the current network output.

In particular, to obtain the measure of performance, the system 100 executes the training process with the process parameters set to the updated setting, e.g., for a fixed number of iterations or for a fixed amount of time, and then determines the measure by computing the value of the blackbox function as a result of the training. For example, the system 100 can measure the loss on a test set after the training process has been executed.

Because the recurrent neural network 110 maintains an internal state and continues to update the internal state while processing each network input, the updated settings generated by the recurrent neural network 110 take into account the input settings that have already been evaluated and the measures for those input settings. Thus, by repeatedly providing inputs to the recurrent neural network 110 as described herein, the system 100 causes the recurrent neural network 110 to predict output settings that effectively explore the space of possible process settings and that result in optimized output settings that cause the training process to have a high performance quality.

In some implementations not covered by the scope of the claims, the system 100 evaluates settings and generates new inputs serially, i.e., one after the other. That is, the system 100 waits until a given candidate setting has been evaluated before selecting and evaluating a new candidate setting.

In other implementations, to decrease the time required to determine the optimized settings, to improve the effectiveness of determining the optimized settings and allow more candidate settings to be evaluated, or both, the system 100 evaluates multiple candidate settings in parallel. In particular, in these implementations, the system 100 includes multiple worker computing units 120. In the example of FIG. 1, the system 100 includes N different worker computing units, where N is an integer greater than one.

Each of the worker computing units is configured to receive an input setting for the process parameters and evaluate the input setting to generate the measure of performance of the machine learning training process with the updated setting. More specifically, the worker computing unit executes the training process with the input setting and measures the performance of the training process with the input setting, e.g., by determining the loss on the test set after the training has process has been completed.

The worker computing units are configured so that they operate independently and asynchronously from each other. In some implementations, only partial independence of operation is achieved, for example, because workers share some resources. A computing unit may be, e.g., a computer, a core within a computer having multiple cores, or other hardware or software within a computer capable of independently performing the computations to evaluate an input setting.

Because the worker computing units operate asynchronously, the network input to the recurrent neural network 110 at time step *t*+1 may not correspond to the updated setting generated at time step *t.* For example, in the example of FIG. 1, the system 100 provides the updated setting ***x**ₜ* to the *i*-th worker computing unit for evaluation. Before the *i*-th worker computing unit has finished the evaluation, the *j*-th worker computing unit finishes evaluating a setting ***x̃****ₜ* to generate a measure ***ỹ****ₜ.* The system 100 can then provide a network input at time step *t* that includes the setting ***x̃****ₜ* and the measure ***ỹ****ₜ* rather than waiting for *i*-th worker computing unit to finish evaluation the setting ***x**ₜ.* Thus, having the worker computing units 120 operate asynchronously can accelerate the determination of the optimized setting for the process parameters.

To initiate the process of selecting candidate architectures, the system 100 ge nerates one or more initial network inputs that include placeholder initial values for the setting and corresponding measure to cause the recurrent neural network 110 to generate initial settings to be evaluated. In some implementations, to assist the recurrent neural network 110 in generating diverse queries that will be effective in initiating the search for the optimized parameters, each network input provided to the recurrent neural network 110 also includes a binary variable o that indicates whether the network input includes placeholder values. That is, the binary variable can take one value, e.g., zero, that indicates that the network input is a placeholder input and another value, e.g., one, that indicates that the network input has been generated as a result of an evaluation of a candidate setting.

FIG. 2 shows an example training iteration 200 during the training of the recurrent neural network 110.

During a given training iteration 200, the system 100 adjusts the current values of the network parameters of the recurrent network 110 as of the beginning of the training iteration 200.

In particular, the system 100 adjusts the current values of the network parameters to minimize a loss function 170 that depends on network outputs generated by the recurrent neural network over a number of time steps. For ease of description, the example iteration 200 includes three time steps: t-1, t, and t+1, which is the last time step in the iteration 200. However, in practice, each training iteration will generally include a large, fixed number of time steps.

More particularly, during training, the network output x generated by the recurrent neural network at each of the time steps defines a query to a training function 150 and the loss function 170 depends on values of the training function 150 for the queries.

Advantageously, the training function 150 does not need to be the same as the function that the recurrent neural network 110 is used to optimize after the recurrent neural network 110 has been trained, which will be referred to as the test time function.

In particular, the training function 150 can be a function that is differentiable and computationally efficient to evaluate. Thus, even when the test time function is a computationally intensive and non-differentiable function, i.e., a function that measures performance of a training process, the training function 150 can be a different function that allows the recurrent neural network 110 to be trained in a computationally intensive manner.

Generally, the training function 150 for a given training iteration is sampled from a prior distribution that permits efficient sampling and function differentiation. An example of such a distribution from which the training function can be sampled is a Gaussian Process.

The loss function 170 can be any appropriate loss that measures how well the query points generated by the recurrent neural network 110 during the training iteration optimize the training function 150.

For example, the loss function 170 can be a summed loss that is a sum of the values of the training function 150 for the query points generated by the recurrent neural network 110 over the time steps in the iteration.

As another example, to encourage the recurrent neural network 110 to explore, the loss function 170 can be an expected posterior improvement loss function. The expected posterior improvement loss function can be a sum of the expected posterior improvements of the query points for the time steps in the iteration. The expected posterior improvement of a query point at a given time step is the expected posterior improvement of querying the query point at the time step given the observed values of the training function at earlier time steps.

As another example of a loss that encourages the recurrent neural network 110 to explore, the loss function 170 can be an observed improvement loss function. The observed posterior improvement loss function can be a sum of the observed posterior improvements of the query points for the time steps in the iteration. The observed posterior improvement of a query point at a given time step is the minimum of (i) zero and (ii) the difference between the value of the training function for the query point and the smallest observed value of the training function at any earlier time step.

As shown in FIG. 2, to train the neural network 110 on the loss function 170, at each time step the system 100 provides an input to the recurrent neural network 110 that includes the query point from the preceding time step and the observed value of the training function 150 for that query point.

Once the observed value for the last time step for the iteration has been determined, the system 100 updates the values of the network parameters by determining the gradient of the loss function 170 with respect to the network parameters and performing stochastic gradient descent (SGD).

Because the training function 150 has been selected to be computationally efficient and differentiable, evaluating the training function 150 at the query points and backpropagating through the training function 150 to determine the gradients are both performed in a computationally-efficient manner. Thus, the recurrent neural network 110 can be trained in a computationally-efficient manner that minimizes the amount of computational resources consumed by the training.

In implementations where the network inputs after training include the binary variable ***o***, the network inputs during training also include the binary variable and the system generates placeholder initial inputs for the first several time steps of each training iteration.

Additionally, in implementations where after training the system 100 uses multiple worker computing units operating asynchronously to evaluate candidate settings, during training the system forces the recurrent neural network not to rely on a specific ordering of network inputs by at times processing network outputs out of order during a training iteration, i.e., by ensuring that for at least some of the time steps in the iteration, the network input at a given time step does not correspond to the network output generated at the preceding time step.

FIG. 3 is a flow chart of an example process 300 for determining an optimized setting for process parameters of a machine learning training process. For convenience, the process 300 will be described as being performed by a system of one or more computers located in one or more locations. For example, a process parameter optimization system, e.g., the process parameter optimization system 100 of FIG. 1, appropriately programmed in accordance with this specification, can perform the process 300.

The system can repeatedly perform the process 300 to generate and evaluate new candidate settings for the process parameters. Once termination criteria have been satisfied, the system can select one of the candidate settings as the optimized setting for the process parameters.

The system process a current network input using the recurrent neural network and in accordance with trained values of the network parameters to obtain a current network output (step 302). As described above, if any candidate settings have already been evaluated, the network input includes the mostly-recently evaluated candidate setting and the performance measure for the candidate setting. If no candidate settings have been evaluated, the current network input is a dummy initial input that includes placeholder values and encourages the recurrent neural network to effectively predict initial candidate settings. That is, if the system evaluates N settings in parallel, for the first *N* iterations of the process 300, the current network input is an initial input that includes placeholder values for the setting and for the performance measure. In some cases, the initial inputs also each include a binary variable set to a value that indicates that the initial input includes placeholder values.

The system obtains a measure of performance of the model training process with the updated setting defined by the current network output (step 304). In some cases, the system directly executes the training process to determine the measure of performance. In other cases, the system sends the updated setting to a worker computing unit from a set of multiple worker computing units that are each configured to execute the training process with received input settings to generate the measure of performance for the input settings.

The system generates a new network input (step 306), i.e., to be used in the next iteration of the process 300. The new network input includes the updated setting and the measure of performance for the updated setting. As described above, in some cases, the new network input also includes a binary variable set to a value that indicates that the new network input does not include placeholder values.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, .e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a described combination can in some cases be excised from the combination, and the combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results, unless the claims state that order or specify the performance of those operations. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

## Claims

1. A system for determining an optimized setting for one or more process parameters of a machine learning training process of training a machine learning model, the system comprising one or more computers and one or more storage devices storing instructions that when executed by the one or more computers cause the one or more computers to implement:
a recurrent neural network (110) having a plurality of network parameters and being configured to:
receive a sequence of network inputs, each network input in the sequence comprising (i) a respective input setting for the one or more process parameters and (ii) a measure of a performance of the machine learning training process with the input setting, and
process the sequence of network inputs in accordance with the network parameters to generate a respective network output for each network input that defines an updated setting for the one or more process parameters; and
a subsystem configured to:
determine, for each of a plurality of input settings for the one or more process parameters, a respective measure of the performance of the machine learning training process in training the machine learning model with the input setting, wherein the determining comprises repeatedly performing the following sequence of steps (302, 304, 306):
processing (302) a current network input using the recurrent neural network in accordance with first values of the network parameters to obtain a current network output, the first values of the network parameters having been determined from initial values of the network parameters by training the recurrent neural network to, at each iteration of the training, optimize a training function, the training comprising adjusting the network parameters to minimize a loss function that depends on values of the training function for queries to the training function, each query being defined by a network output generated by the recurrent neural network at each of the iterations;
obtaining (304) a measure of the performance of the machine learning training process in training the machine learning model with the updated setting defined by the current network output, and
generating (306) a new network input that comprises (i) the updated setting defined by the current network output and (ii) the measure of the performance of the machine learning training process with the updated setting defined by the current network output; and
wherein the subsystem is further configured to select an input setting from the plurality of input settings as the optimized setting for the one or more process parameters using the measures of the performance for the input settings, whereby the machine learning model can be trained using the selected input setting for the one or more process parameters of the machine learning training process; and
a plurality of worker computing units (120), wherein each worker computing unit (120) is configured to:
receive an input setting for the one or more process parameters;
execute the machine learning training process with the input setting; and
measure the performance of the machine learning training process with the input setting, and
wherein each worker computing unit (120) operates asynchronously from each other worker computing unit (120);
wherein obtaining (304) a measure of the performance of the machine learning training process in training the machine learning model with the updated setting defined by the current network output comprises:
providing the updated setting defined by the current network output to one of the plurality of worker computing units and, obtaining, from the one of the plurality of worker computing units, the measure of the performance of the machine learning training process, and
wherein the subsystem is further configured to:
train the machine learning model using the machine learning training process with the optimized setting for the process parameters; and
output the trained machine learning model.

2. The system of claim 1, wherein the process parameters comprise one or more hyper-parameters for the machine learning training process.

3. The system of any one of claims 1 or 2, wherein the process parameters comprise one or more architecture settings of the machine learning model being trained using the machine learning training process.

4. The system of any one of the preceding claims, wherein determining, for each of a plurality of input settings for the one or more process parameters, a respective measure of the performance of the machine learning training process with the input setting further comprises:
generating a plurality of initial network inputs, each initial network input comprising (i) a placeholder setting and (ii) a placeholder measure of performance;
processing each of the plurality of initial network inputs using the recurrent neural network to generate a respective initial network output for each initial network input; and
providing the updated settings defined by the initial network outputs to respective worker computing units in the plurality of worker computing units (120).

5. The system of claim 4, wherein each network input further includes a binary variable that indicates whether or not the network input includes placeholder values, and wherein the binary variable in each initial network input indicates that the initial network input includes placeholder values.

6. The system of any one of claims 1-5, wherein the recurrent neural network is a differentiable neural computer, DNC.

7. The system of any one of claims 1-6, wherein the recurrent neural network is a long short-term memory, LSTM, neural network.

8. The system of any one of claims 1-7, wherein the training function for each iteration is sampled from a training distribution.

9. The system of any one of claims 1-7, wherein training the recurrent neural network (110) comprises training the recurrent neural network to minimize: a summed loss function; an expected posterior improvement loss function; or an observed improvement loss function.

10. The system of any one of the preceding claims, wherein the machine learning model is configured to perform an image processing task or a speech recognition task.

11. A computer-implemented method comprising the operations performed by the system of any one of claims 1-10.

12. A computer-readable storage medium comprising instructions which, when executed on the system of one of claims 1-10, cause said system to execute the steps of the method of claim 11.

## Patentansprüche

1. System zum Bestimmen einer optimierten Einstellung für einen oder mehrere Prozessparameter eines Maschinenlern-Trainingsprozesses zum Trainieren eines Maschinenlernmodells, wobei das System einen oder mehrere Computer und eine oder mehrere Speichervorrichtungen umfasst, die Anweisungen speichern, die, wenn sie durch den einen oder die mehreren Computer ausgeführt werden, den einen oder die mehreren Computer dazu veranlassen, Folgendes zu implementieren:
ein rekurrentes neuronales Netz (110), das eine Vielzahl von Netzparametern aufweist und zu Folgendem konfiguriert ist:
Empfangen einer Sequenz von Netzeingaben, wobei jede Netzeingabe in der Sequenz (i) eine jeweilige Eingabeeinstellung für den einen oder die mehreren Prozessparameter und (ii) ein Maß einer Leistungsfähigkeit des Maschinenlern-Trainingsprozesses mit der Eingabeeinstellung umfasst und
Verarbeiten der Sequenz von Netzeingaben gemäß den Netzparametern, um eine jeweilige Netzausgabe für jede Netzeingabe zu erzeugen, die eine aktualisierte Einstellung für den einen oder die mehreren Prozessparameter definiert; und
ein Subsystem, das zu Folgendem konfiguriert ist:
Bestimmen, für jede einer Vielzahl von Eingabeeinstellungen für den einen oder die mehreren Prozessparameter, eines jeweiligen Maßes der Leistungsfähigkeit des Maschinenlern-Trainingsprozesses beim Trainieren des Maschinenlernmodells mit der Eingabeeinstellung, wobei das Bestimmen wiederholtes Durchführen der folgenden Sequenz von Schritten (302, 304, 306) umfasst:
Verarbeiten (302) einer aktuellen Netzeingabe unter Verwendung des rekurrenten neuronalen Netzes gemäß erster Werte der Netzparameter, um eine aktuelle Netzausgabe zu erlangen, wobei die ersten Werte der Netzparameter aus Anfangswerten der Netzparameter durch Trainieren des rekurrenten neuronalen Netzes dazu, bei jeder Wiederholung des Trainierens eine Trainingsfunktion zu optimieren, bestimmt wurden, wobei das Trainieren Anpassen der Netzparameter umfasst, um eine Verlustfunktion, die von Werten der Trainingsfunktion für Abfragen an die Trainingsfunktion abhängt, zu minimieren, wobei jede Abfrage durch eine Netzausgabe definiert ist, die durch das rekurrente neuronale Netz bei jeder der Wiederholungen erzeugt wird;
Erlangen (304) eines Maßes der Leistungsfähigkeit des Maschinenlern-Trainingsprozesses beim Trainieren des Maschinenlernmodells mit der aktualisierten Einstellung, die durch die aktuelle Netzausgabe definiert ist, und
Erzeugen (306) einer neuen Netzeingabe, die (i) die aktualisierte Einstellung, die durch die aktuelle Netzausgabe definiert ist, und (ii) das Maß der Leistungsfähigkeit des Maschinenlern-Trainingsprozesses mit der aktualisierten Einstellung, die durch die aktuelle Netzausgabe definiert ist, umfasst; und
wobei das Subsystem ferner dazu konfiguriert ist, eine Eingabeeinstellung aus der Vielzahl von Eingabeeinstellungen als die optimierte Einstellung für den einen oder die mehreren Prozessparameter auszuwählen, indem es die Maße der Leistungsfähigkeit für die Eingabeeinstellungen verwendet, wodurch das Maschinenlernmodell unter Verwendung der ausgewählten Eingabeeinstellung für den einen oder die mehreren Prozessparameter des Maschinenlern-Trainingsprozesses trainiert werden kann; und
eine Vielzahl von Worker-Recheneinheiten (120), wobei jede Worker-Recheneinheit (120) zu Folgendem konfiguriert ist:
Empfangen einer Eingabeeinstellung für den einen oder die mehreren Prozessparameter;
Ausführen des Maschinenlern-Trainingsprozesses mit der Eingabeeinstellung; und
Messen der Leistungsfähigkeit des Maschinenlern-Trainingsprozesses mit der Eingabeeinstellung und
wobei jede Worker-Recheneinheit (120) asynchron zu jeder anderen Worker-Recheneinheit (120) arbeitet;
wobei das Erlangen (304) eines Maßes der Leistungsfähigkeit des Maschinenlern-Trainingsprozesses beim Trainieren des Maschinenlernmodells mit der aktualisierten Einstellung, die durch die aktuelle Netzausgabe definiert ist, Folgendes umfasst: Bereitstellen der aktualisierten Einstellung, die durch die aktuelle Netzausgabe definiert ist, an eine aus der Vielzahl von Worker-Recheneinheiten und Erlangen, von der einen aus der Vielzahl von Worker-Recheneinheiten, des Maßes der Leistungsfähigkeit des Maschinenlern-Trainingsprozesses, und
wobei das Subsystem ferner zu Folgendem konfiguriert ist:
Trainieren des Maschinenlernmodells unter Verwendung des Maschinenlern-Trainingsprozesses mit der optimierten Einstellung für die Prozessparameter; und
Ausgeben des trainierten Maschinenlernmodells.

2. System nach Anspruch 1, wobei die Prozessparameter einen oder mehrere Hyperparameter für den Maschinenlern-Trainingsprozess umfassen.

3. System nach einem der Ansprüche 1 oder 2, wobei die Prozessparameter eine oder mehrere Architektureinstellungen des Maschinenlernmodells umfassen, das unter Verwendung des Maschinenlern-Trainingsprozesses trainiert wird.

4. System nach einem der vorhergehenden Ansprüche, wobei das Bestimmen, für jede einer Vielzahl von Eingabeeinstellungen für den einen oder die mehreren Prozessparameter, eines jeweiligen Maßes der Leistungsfähigkeit des Maschinenlern-Trainingsprozesses mit der Eingabeeinstellung ferner Folgendes umfasst:
Erzeugen einer Vielzahl von Anfangsnetzeingaben, wobei jede Anfangsnetzeingabe (i) eine Platzhaltereinstellung und (ii) ein Platzhalter-Leistungsfähigkeitsmaß umfasst;
Verarbeiten jeder der Vielzahl von Anfangsnetzeingaben unter Verwendung des rekurrenten neuronalen Netzes, um eine jeweilige Anfangsnetzausgabe für jede Anfangsnetzeingabe zu erzeugen; und
Bereitstellen der aktualisierten Einstellungen, die durch die Anfangsnetzausgaben definiert sind, an jeweilige Worker-Recheneinheiten in der Vielzahl von Worker-Recheneinheiten (120).

5. System nach Anspruch 4, wobei jede Netzeingabe ferner eine binäre Variable beinhaltet, die angibt, ob die Netzeingabe Platzhalterwerte beinhaltet oder nicht, und wobei die binäre Variable in jeder Anfangsnetzeingabe angibt, dass die Anfangsnetzeingabe Platzhalterwerte beinhaltet.

6. System nach einem der Ansprüche 1-5, wobei das rekurrente neuronale Netz ein differenzierbarer neuronaler Computer, DNC, ist.

7. System nach einem der Ansprüche 1-6, wobei das rekurrente neuronale Netz ein neuronales Long-Short-Term-Memory-Netz, LSTM-Netz, ist.

8. System nach einem der Ansprüche 1-7, wobei die Trainingsfunktion für jede Wiederholung aus einer Trainingsverteilung abgetastet wird.

9. System nach einem der Ansprüche 1-7, wobei das Trainieren des rekurrenten neuronalen Netzes (110) Trainieren des rekurrenten neuronalen Netzes, um Folgendes zu minimieren, umfasst: eine summierte Verlustfunktion; eine Expected-Posterior-Improvement-Verlustfunktion; oder eine Observed-Improvement-Verlustfunktion.

10. System nach einem der vorhergehenden Ansprüche, wobei das Maschinenlernmodell dazu konfiguriert ist, eine Bildverarbeitungsaufgabe oder eine Spracherkennungsaufgabe durchzuführen.

11. Computerimplementiertes Verfahren, umfassend die Vorgänge, die durch das System nach einem der Ansprüche 1-10 durchgeführt werden.

12. Computerlesbares Speichermedium, umfassend Anweisungen, die, wenn sie auf dem System nach einem der Ansprüche 1-10 ausgeführt werden, das System dazu veranlassen, die Schritte des Verfahrens nach Anspruch 11 auszuführen.

## Revendications

1. Système permettant de déterminer une configuration optimisée pour un ou plusieurs paramètres de processus d'un processus d'entraînement par apprentissage automatique pour l'entraînement d'un modèle d'apprentissage automatique, le système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à mettre en œuvre :
un réseau neuronal récurrent (110) ayant une pluralité de paramètres de réseau et étant configuré pour :
recevoir une séquence d'entrées du réseau, chaque entrée du réseau de la séquence comprenant (i) une configuration d'entrée respective pour les un ou plusieurs paramètres de processus et (ii) une mesure de la performance du processus d'entraînement par apprentissage automatique avec la configuration d'entrée, et
traiter la séquence d'entrées du réseau conformément aux paramètres de réseau afin de générer une sortie du réseau respective pour chaque entrée du réseau qui définit une configuration mise à jour pour les un ou plusieurs paramètres de processus ; et
un sous-système configuré pour :
déterminer, pour chacune d'une pluralité de configurations d'entrée pour les un ou plusieurs paramètres de processus, une mesure respective de la performance du processus d'entraînement par apprentissage automatique dans l'entraînement du modèle d'apprentissage automatique avec la configuration d'entrée, dans lequel la détermination comprend la réalisation répétée de la séquence d'étapes suivante (302, 304, 306) :
le traitement (302) d'une entrée courante du réseau à l'aide du réseau neuronal récurrent conformément à de premières valeurs des paramètres de réseau pour obtenir une sortie courante du réseau, les premières valeurs des paramètres de réseau ayant été déterminées à partir de valeurs initiales des paramètres de réseau en entraînant le réseau neuronal récurrent pour optimiser, à chaque itération de l'entraînement, une fonction d'entraînement, l'entraînement comprenant l'ajustement des paramètres de réseau pour minimiser une fonction de perte qui dépend des valeurs de la fonction d'entraînement pour des requêtes adressées à la fonction d'entraînement, chaque requête étant définie par une sortie du réseau générée par le réseau neuronal récurrent à chacune des itérations ;
l'obtention (304) d'une mesure de la performance du processus d'entraînement par apprentissage automatique dans l'entraînement du modèle d'apprentissage automatique avec la configuration mise à jour définie par la sortie courante du réseau, et
la génération (306) d'une nouvelle entrée du réseau qui comprend (i) la configuration mise à jour définie par la sortie courante du réseau et (ii) la mesure de la performance du processus d'entraînement par apprentissage automatique avec la configuration mise à jour définie par la sortie courante du réseau ; et
dans lequel le sous-système est en outre configuré pour sélectionner une configuration d'entrée parmi la pluralité de configurations d'entrée en tant que configuration optimisée pour les un ou plusieurs paramètres de processus à l'aide des mesures de la performance pour les configurations d'entrée, moyennant quoi le modèle d'apprentissage automatique peut être entraîné à l'aide de la configuration d'entrée sélectionnée pour les un ou plusieurs paramètres de processus du processus d'entraînement par apprentissage automatique ; et
une pluralité d'unités de calcul de travail (120), dans lequel chaque unité de calcul de travail (120) est configurée pour :
recevoir une configuration d'entrée pour les un ou plusieurs paramètres de processus ;
exécuter le processus d'entraînement par apprentissage automatique avec la configuration d'entrée ; et
mesurer la performance du processus d'entraînement par apprentissage automatique avec la configuration d'entrée, et
dans lequel chaque unité de calcul de travail (120) fonctionne de manière asynchrone par rapport à chaque autre unité de calcul de travail (120) ;
dans lequel l'obtention (304) d'une mesure de la performance du processus d'entraînement par apprentissage automatique dans l'entraînement du modèle d'apprentissage automatique avec la configuration mise à jour définie par la sortie courante du réseau comprend :
la fourniture de la configuration mise à jour définie par la sortie courante du réseau à l'une de la pluralité d'unités de calcul de travail et l'obtention, de l'une de la pluralité d'unités de calcul de travail, de la mesure de la performance du processus d'entraînement par apprentissage automatique, et
dans lequel le sous-système est en outre configuré pour :
entraîner le modèle d'apprentissage automatique à l'aide du processus d'entraînement par apprentissage automatique avec la configuration optimisée pour les paramètres de processus ; et
produire le modèle d'apprentissage automatique entraîné.

2. Système selon la revendication 1, dans lequel les paramètres de processus comprennent un ou plusieurs hyperparamètres pour le processus d'entraînement par apprentissage automatique.

3. Système selon l'une quelconque des revendications 1 ou 2, dans lequel les paramètres de processus comprennent une ou plusieurs configurations d'architecture du modèle d'apprentissage automatique entraîné à l'aide du processus d'entraînement par apprentissage automatique.

4. Système selon l'une quelconque des revendications précédentes, dans lequel la détermination, pour chacune d'une pluralité de configurations d'entrée pour les un ou plusieurs paramètres de processus, d'une mesure respective de la performance du processus d'entraînement par apprentissage automatique avec la configuration d'entrée comprend en outre :
la génération d'une pluralité d'entrées initiales du réseau, chaque entrée initiale du réseau comprenant (i) une configuration d'espace réservé et (ii) une mesure de performance d'espace réservé ;
le traitement de chacune de la pluralité d'entrées initiales du réseau à l'aide du réseau neuronal récurrent afin de générer une sortie initiale respective pour chaque entrée initiale du réseau ; et
la fourniture des configurations mises à jour définies par les sorties initiales du réseau aux unités de calcul de travail respectives dans la pluralité d'unités de calcul de travail (120).

5. Système selon la revendication 4, dans lequel chaque entrée du réseau comporte en outre une variable binaire qui indique si l'entrée du réseau comporte ou non des valeurs d'espace réservé, et dans lequel la variable binaire de chaque entrée initiale du réseau indique que l'entrée initiale du réseau comporte des valeurs d'espace réservé.

6. Système selon l'une quelconque des revendications 1 à 5, dans lequel le réseau neuronal récurrent est un ordinateur neuronal différentiable, DNC.

7. Système selon l'une quelconque des revendications 1 à 6, dans lequel le réseau neuronal récurrent est un réseau neuronal à mémoire à court et long terme, LSTM.

8. Système selon l'une quelconque des revendications 1 à 7, dans lequel la fonction d'entraînement pour chaque itération est échantillonnée à partir d'une distribution d'entraînement.

9. Système selon l'une quelconque des revendications 1 à 7, dans lequel l'entraînement du réseau neuronal récurrent (110) comprend l'entraînement du réseau neuronal récurrent pour minimiser : une fonction de perte cumulée ; une fonction de perte d'amélioration postérieure attendue ; ou une fonction de perte d'amélioration observée.

10. Système selon l'une quelconque des revendications précédentes, dans lequel le modèle d'apprentissage automatique est configuré pour réaliser une tâche de traitement d'image ou une tâche de reconnaissance vocale.

11. Procédé mis en œuvre par ordinateur comprenant les opérations réalisées par le système selon l'une quelconque des revendications 1 à 10.

12. Support de stockage lisible par ordinateur comprenant des instructions qui, lorsqu'elles sont exécutées sur le système selon l'une des revendications 1 à 10, amènent ledit système à exécuter les étapes du procédé selon la revendication 11.
